# EUROPEAN PATENT APPLICATION

(11) **EP 3 578 853 A1**
(43) Date of publication of application: **11.12.2019**
(21) Application number: 18790051.9
(22) Date of filing: 27.04.2018
(51) Int. Cl.: F16F 15/14, F02B 75/06, F16F 15/134, F16D 13/64, F16H 45/02

(54) **VIBRATION DAMPING DEVICE**

(30) Priority: 28.04.2017 JP 2017089285; 30.06.2017 JP 2017129586
(71) Applicant: AISIN AW CO., LTD., Anjo-shi, Aichi 444-1192 (JP)
(72) Inventor: OI, Yoichi, Anjo-shi Aichi 444-1192 (JP); SAKAMOTO, Takao, Anjo-shi Aichi 444-1192 (JP); FUKUOKA, Takuya, Anjo-shi Aichi 444-1192 (JP); ITOU, Kazuhiro, Anjo-shi Aichi 444-1192 (JP)
(74) Representative: Kramer Barske Schmidtchen Patentanwälte PartG mbB
(86) International application number: PCT/JP2018/017299
(87) International publication number: WO 2018/199325

(57) **Abstract**

A vibration damping device includes: a support member that rotates about the center of rotation of a rotary element; a restoring force generation member coupled to the support member; an inertial mass body coupled to the support member via the restoring force generation member; a guided portion provided on the restoring force generation member or the inertial mass body; and a guide portion formed in the inertial mass body or the restoring force generation member. The guide portion guides the guided portion such that the restoring force generation member is swung along the radial direction with respect to the center of rotation and the inertial mass body is swung about the center of rotation when the support member is rotated. A component force of a centrifugal force that acts on the restoring force generation member is transferred from the guided portion to the guide portion. The restoring force generation member includes two mass bodies coupled so as to face each other in the axial direction of the support member and disposed on both sides of the inertial mass body in the axial direction.

## Description

### TECHNICAL FIELD

The invention according to the present disclosure relates to a vibration damping device that includes a restoring force generation member that is swingable along with rotation of a support member and an inertial mass body coupled to the support member via the restoring force generation member and swung in conjunction with the restoring force generation member along with rotation of the support member.

### BACKGROUND ART

There has hitherto been known a torque fluctuation suppression device that suppresses fluctuations in torque of a rotary body to which torque from an engine is input, and that includes a mass body disposed side by side with the rotary body in the axial direction and disposed so as to be rotatable relative to the rotary body, centrifugal elements disposed in recessed portions formed in the rotary body so as to be movable in the radial direction in order to receive a centrifugal force due to rotation of the rotary body and the mass body, and a cam mechanism that has a cam provided to the centrifugal element or one of the rotary body and the mass body and a cam follower provided to one of the rotary body and the mass body or the centrifugal element (see Patent Document 1, for example). In the torque fluctuation suppression device, the mass body has a first inertia ring and a second inertia ring disposed so as to face each other with the rotary body interposed therebetween, and the first and second inertia rings are coupled to each other by a pin that penetrates the rotary body in the axial direction or a coupling portion that couples the respective outer peripheral ends of the first and second inertia rings to each other. A plurality of centrifugal elements are disposed between the first and second inertia rings with a clearance therebetween in the circumferential direction. The cam mechanism receives a centrifugal force that acts on the centrifugal elements and, when relative displacement in the rotational direction is caused between the rotary body and the mass body, converts the centrifugal force into a circumferential force in the direction of reducing the relative displacement. In this way, the properties for suppressing torque fluctuations can be varied in accordance with the rotational speed of the rotary body by utilizing the centrifugal force which acts on the centrifugal elements as a force for suppressing the torque fluctuations.

### Related-art Documents

### Patent Documents

Patent Document 1: Japanese Patent Application Publication No. 2017-53467 (JP 2017-53467 A)

### SUMMARY OF THE INVENTION

With the torque fluctuation suppression device described in Patent Document 1, good vibration damping performance can be obtained when the order of the device coincides with the excitation order of the engine. In the case where the plurality of centrifugal elements are disposed between the first and second inertia rings as discussed above, however, it is not easy to adequately secure an installation space for the centrifugal elements such that the centrifugal elements do not interfere with the coupling portion while coupling the first and second inertia rings to each other using the pin or the coupling portion. In this case, in addition, the degree of freedom in the shape of the centrifugal elements or the setting of the position of the center of gravity may be lowered, which may make it difficult to cause the order of the torque fluctuation suppression device to coincide with the excitation order of the engine. Therefore, with the torque fluctuation suppression device according to the related art, it is difficult to further increase the centrifugal force which acts on the centrifugal elements by securing a sufficient weight of the centrifugal elements, and a good vibration damping effect may not be obtained.

Thus, it is a main object of the invention according to the present disclosure to further improve the vibration damping performance of a vibration damping device that includes a restoring force generation member that is swung in the radial direction of a support member along with rotation of the support member and an inertial mass body that is swung in conjunction with the restoring force generation member.

The present disclosure provides a vibration damping device that includes: a support member that rotates together with a rotary element, to which torque from an engine is transferred, about a center of rotation of the rotary element; a restoring force generation member that is coupled to the support member so as to transmit and receive torque to and from the support member and that is swingable along a radial direction of the support member along with rotation of the support member; and an inertial mass body coupled to the support member via the restoring force generation member and swung about the center of rotation in conjunction with the restoring force generation member along with rotation of the support member, the vibration damping device including: a guided portion provided on one of the restoring force generation member and the inertial mass body; and a guide portion formed in the other of the restoring force generation member and the inertial mass body, the guide portion guiding the guided portion such that the restoring force generation member is swung along the radial direction with respect to the center of rotation and the inertial mass body is swung about the center of rotation when the support member is rotated, and a component force of a centrifugal force that acts on the restoring force generation member being transferred from the guided portion to the guide portion, in which the restoring force generation member includes two mass bodies coupled so as to face each other in an axial direction of the support member and disposed on both sides of the inertial mass body in the axial direction.

In the vibration damping device according to the present disclosure, when the support member rotates together with the rotary element, the restoring force generation member is swung along the radial direction of the support member with the guided portion, which is formed on one of the restoring force generation member and the inertial mass body, guided by the guide portion, which is formed in the other of the restoring force generation member and the inertial mass body. When the support member rotates together with the rotary element, in addition, a component force of a centrifugal force that acts on the restoring force generation member is transferred to the inertial mass body via the guided portion and the guide portion, and the inertial mass body is swung about the center of rotation in conjunction with the restoring force generation member with the guided portion guided by the guide portion. Consequently, it is possible to damp vibration of the rotary element well by applying torque (inertia torque), which is opposite in phase to fluctuation torque transferred from the engine to the rotary element, to the support member via the restoring force generation member. In the vibration damping device according to the present disclosure, in addition, motion of the restoring force generation member, which is coupled to the support member, is regulated (restrained) by the guided portion and the guide portion which are formed on the restoring force generation member and the inertial mass body. Consequently, a reduction in the order of the vibration damping device due to rotation of the restoring force generation member can be suppressed by regulating rotation of the restoring force generation member, and damping of a centrifugal force (a component force thereof) that acts on the restoring force generation member, which is used as a restoring force for swinging the inertial mass body, can be suppressed by smoothly swinging the restoring force generation member with respect to the support member. Further, the restoring force generation member includes two mass bodies coupled so as to face each other in an axial direction of the support member and disposed on both sides of the inertial mass body in the axial direction. Consequently, both the mass bodies and the inertial mass body can be disposed on the outer peripheral side of the vibration damping device. Thus, a centrifugal force that acts on the restoring force generation member can be further increased, and the moment of inertia of the inertial mass body can be further increased. In addition, it is also possible to increase the weight of the restoring force generation member and set the center of gravity of the restoring force generation member further on the radially outer side by securing the installation space for and the weight of the restoring force generation member (mass bodies) well. Further, by disposing the inertial mass body between the two mass bodies in the axial direction, the degree of freedom in the setting of the shape and the position of the center of gravity of the restoring force generation member can be improved, and the restoring force generation member and the inertial mass body can be provided with the guided portion and the guide portion while easily coupling the two mass bodies to each other. As a result, it is possible to further improve the vibration damping performance of the vibration damping device which includes the restoring force generation member which is swung in the radial direction of the support member along with rotation of the support member.

### BRIEF DESCRIPTION OF THE DRAWINGS

[FIG. 1] FIG. 1 is a schematic diagram of a starting device that includes a vibration damping device according to the present disclosure.
[FIG. 2] FIG. 2 is a sectional view of the starting device illustrated in FIG. 1.
[FIG. 3] FIG. 3 is an enlarged view illustrating the vibration damping device according to the present disclosure.
[FIG. 4] FIG. 4 illustrates a restoring force generation member included in the vibration damping device according to the present disclosure.
[FIG. 5] FIG. 5 is an enlarged sectional view illustrating an essential portion of the vibration damping device according to the present disclosure.
[FIG. 6] FIG. 6 is an enlarged sectional view illustrating an essential portion of the vibration damping device according to the present disclosure.
[FIG. 7] FIG. 7 is an enlarged view illustrating the vibration damping device according to the present disclosure.
[FIG. 8] FIG. 8 is an enlarged view illustrating a modification of the vibration damping device according to the present disclosure.
[FIG. 9] FIG. 9 is an enlarged view illustrating another vibration damping device according to the present disclosure.
[FIG. 10] FIG. 10 is an enlarged sectional view illustrating an essential portion of the another vibration damping device according to the present disclosure.
[FIG. 11] FIG. 11 is an enlarged sectional view illustrating an essential portion of the another vibration damping device according to the present disclosure.
[FIG. 12] FIG. 12 is an enlarged sectional view illustrating an essential portion of yet another vibration damping device according to the present disclosure.
[FIG. 13] FIG. 13 is an enlarged sectional view illustrating an essential portion of the yet another vibration damping device according to the present disclosure.
[FIG. 14] FIG. 14 is an enlarged sectional view illustrating an essential portion of a different vibration damping device according to the present disclosure.
[FIG. 15] FIG. 15 is an enlarged sectional view illustrating an essential portion of the different vibration damping device according to the present disclosure.
[FIG. 16] FIG. 16 is a schematic diagram illustrating a modification of a damper device that includes the vibration damping device according to the present disclosure.
[FIG. 17] FIG. 17 is a schematic diagram illustrating another modification of the damper device which includes the vibration damping device according to the present disclosure.

### MODES FOR CARRYING OUT THE INVENTION

Now, an embodiment of the invention according to the present disclosure will be described with reference to the drawings.

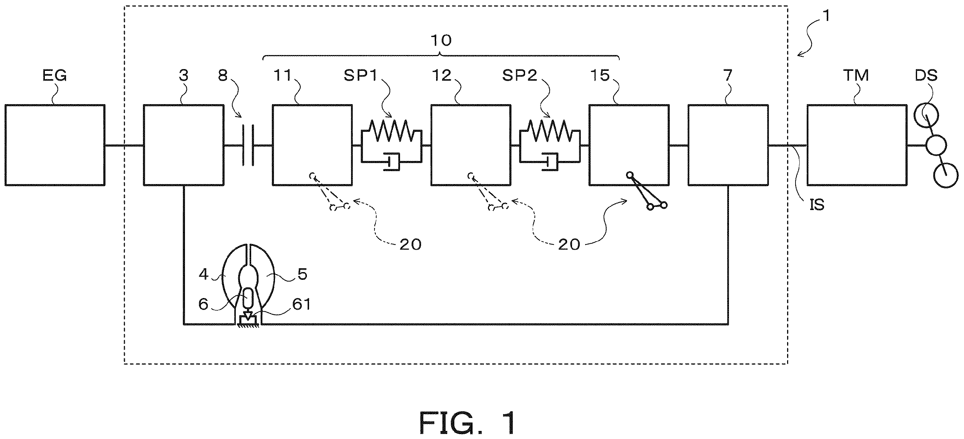

FIG. 1 is a schematic diagram illustrating a starting device 1 that includes a vibration damping device 20 according to the present disclosure. The starting device 1 illustrated in the drawing is mounted on a vehicle that includes an engine (internal combustion engine) EG that serves as a drive device, for example, and transfers power from the engine EG to drive shafts DS of the vehicle. In addition to the vibration damping device 20, the starting device 1 includes: a front cover 3 that serves as an input member coupled to a crankshaft of the engine EG; a pump impeller (input-side fluid transmission element) 4 fixed to the front cover 3 to rotate together with the front cover 3; a turbine runner (output-side fluid transmission element) 5 that is rotatable coaxially with the pump impeller 4; a damper hub 7 that serves as an output member fixed to an input shaft IS of a transmission (power transfer device) TM that is an automatic transmission (AT), a continuously variable transmission (CVT), a dual clutch transmission (DCT), a hybrid transmission, or a speed reducer; a lock-up clutch 8; a damper device 10; and so forth.

In the following description, unless specifically stated, the term "axial direction" basically indicates the direction of extension of the center axis (axis) of the starting device 1 or the damper device 10 (vibration damping device 20). In addition, unless specifically stated, the term "radial direction" basically indicates the radial direction of the starting device 1, the damper device 10, or a rotary element of the damper device 10 etc., that is, the direction of extension of a line that extends in directions (radial directions) that are orthogonal to the center axis of the starting device 1 or the damper device 10 from the center axis. Further, unless specifically stated, the term "circumferential direction" basically indicates the circumferential direction of the starting device 1, the damper device 10, or a rotary element of the damper device 10 etc., that is, a direction along the rotational direction of such a rotary element.

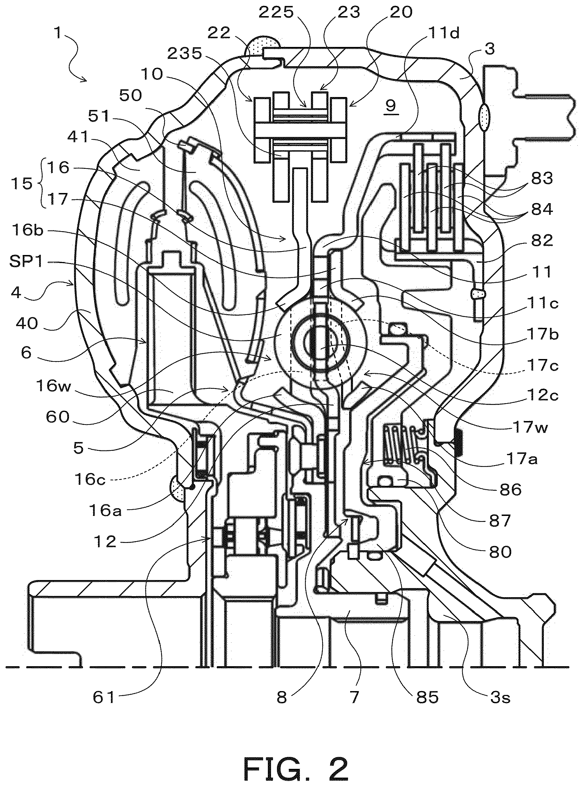

As illustrated in FIG. 2, the pump impeller 4 has a pump shell 40 tightly fixed to the front cover 3 and a plurality of pump blades 41 disposed on the inner surface of the pump shell 40. As illustrated in FIG. 2, the turbine runner 5 has a turbine shell 50 and a plurality of turbine blades 51 disposed on the inner surface of the turbine shell 50. The inner peripheral portion of the turbine shell 50 is fixed to the damper hub 7 via a plurality of rivets.

The pump impeller 4 and the turbine runner 5 face each other. A stator 6 is disposed between and coaxially with the pump impeller 4 and the turbine runner 5. The stator 6 rectifies a flow of working oil (working fluid) from the turbine runner 5 to the pump impeller 4. The stator 6 has a plurality of stator blades 60. The rotational direction of the stator 6 is set to only one direction by a one-way clutch 61. The pump impeller 4, the turbine runner 5, and the stator 6 form a torus (annular flow passage) that allows circulation of working oil, and function as a torque converter (fluid transmission apparatus) with a torque amplification function. It should be noted, however, that the stator 6 and the one-way clutch 61 may be omitted from the starting device 1, and that the pump impeller 4 and the turbine runner 5 may function as a fluid coupling.

The lock-up clutch 8 is constituted as a hydraulic multi-plate clutch, and can establish and release lock-up in which the front cover 3 and the damper hub 7, that is, the input shaft IS of the transmission TM, are coupled to each other via the damper device 10. The lock-up clutch 8 includes: a lock-up piston 80 supported by a center piece 3s, which is fixed to the front cover 3, so as to be movable in the axial direction; a drum portion 11d that serves as a clutch drum integrated with a drive member 11 which is an input element of the damper device 10; an annular clutch hub 82 fixed to the inner surface of the front cover 3 so as to face the lock-up piston 80; a plurality of first friction engagement plates (friction plates having a friction material on both surfaces) 83 fitted with spines formed on the inner peripheral surface of the drum portion 11d; and a plurality of second friction engagement plates (separator plates) 84 fitted with splines formed on the outer peripheral surface of the clutch hub 82.

The lock-up clutch 8 further includes: an annular flange member (oil chamber defining member) 85 attached to the center piece 3s of the front cover 3 so as to be positioned on the opposite side of the lock-up piston 80 from the front cover 3, that is, on the side of the damper device 10 with respect to the lock-up piston 80; and a plurality of return springs 86 disposed between the front cover 3 and the lock-up piston 80. As illustrated in the drawing, the lock-up piston 80 and the flange member 85 define an engagement oil chamber 87. Working oil (an engagement hydraulic pressure) is supplied to the engagement oil chamber 87 from a hydraulic control device (not illustrated). Increasing the engagement hydraulic pressure for the engagement oil chamber 87 moves the lock-up piston 80 in the axial direction so as to press the first and second friction engagement plates 83 and 84 toward the front cover 3, which can bring the lock-up clutch 8 into engagement (complete engagement or slip engagement). The lock-up clutch 8 may be constituted as a hydraulic single-plate clutch.

As illustrated in FIGS. 1 and 2, the damper device 10 includes, as rotary elements, the drive member (input element) 11 which includes the drum portion 11d, an intermediate member (intermediate element) 12, and a driven member (output element) 15. The damper device 10 further includes, as torque transfer elements, a plurality of (e.g. four each in the present embodiment) first springs (first elastic bodies) SP1 and second springs (second elastic bodies) SP2 disposed alternately at intervals in the circumferential direction on the same circumference. Arc coil springs, which are made of a metal material wound so as to have an axis that extends arcuately when no load is applied, or straight coil springs, which are made of a metal material spirally wound so as to have an axis that extends straight when no load is applied, are adopted as the first and second springs SP1 and SP2. As illustrated in the drawings, so-called double springs may be adopted as the first and second springs SP1 and SP2.

The drive member 11 of the damper device 10 is an annular member that includes the drum portion 11d on the outer peripheral side, and has a plurality of (e.g. four at intervals of 90° in the present embodiment) spring abutment portions 11c provided at intervals in the circumferential direction to extend radially inward from the inner peripheral portion. The intermediate member 12 is an annular plate-like member, and has a plurality of (e.g. four at intervals of 90° in the present embodiment) spring abutment portions 12c provided at intervals in the circumferential direction to extend radially inward from the outer peripheral portion. The intermediate member 12 is rotatably supported by the damper hub 7, and surrounded by the drive member 11 on the radially inner side of the drive member 11.

As illustrated in FIG. 2, the driven member 15 includes an annular first driven plate 16 and an annular second driven plate 17 coupled so as to rotate together with the first driven plate 16 via a plurality of rivets (not illustrated). The first driven plate 16 is constituted as a plate-like annular member, disposed in more proximity to the turbine runner 5 than the second driven plate 17, and fixed to the damper hub 7 via a plurality of rivets together with the turbine shell 50 of the turbine runner 5. The second driven plate 17 is constituted as a plate-like annular member that has an inside diameter that is smaller than that of the first driven plate 16, and the outer peripheral portion of the second driven plate 17 is fastened to the first driven plate 16 via a plurality of rivets (not illustrated).

The first driven plate 16 has: a plurality of (e.g. four in the present embodiment) spring housing windows 16w that extend arcuately and that are disposed at intervals (equal intervals) in the circumferential direction; a plurality of (e.g. four in the present embodiment) spring support portions 16a that extend along the inner peripheral edges of the corresponding spring housing windows 16w and that are arranged at intervals (equal intervals) in the circumferential direction; a plurality of (e.g. four in the present embodiment) spring support portions 16b that extend along the outer peripheral edges of the corresponding spring housing windows 16w and that are arranged at intervals (equal intervals) in the circumferential direction to face the corresponding spring support portions 16a in the radial direction of the first driven plate 16; and a plurality of (e.g. four in the present embodiment) spring abutment portions 16c. The plurality of spring abutment portions 16c of the first driven plate 16 are provided such that each spring abutment portion 16c is interposed between the spring housing windows 16w (spring support portions 16a and 16b) which are adjacent to each other along the circumferential direction.

The second driven plate 17 also has: a plurality of (e.g. four in the present embodiment) spring housing windows 17w that extend arcuately and that are disposed at intervals (equal intervals) in the circumferential direction; a plurality of (e.g. four in the present embodiment) spring support portions 17a that extend along the inner peripheral edges of the corresponding spring housing windows 17w and that are arranged at intervals (equal intervals) in the circumferential direction; a plurality of (e.g. four in the present embodiment) spring support portions 17b that extend along the outer peripheral edges of the corresponding spring housing windows 17w and that are arranged at intervals (equal intervals) in the circumferential direction to face the corresponding spring support portions 17a in the radial direction of the second driven plate 17; and a plurality of (e.g. four in the present embodiment) spring abutment portions 17c. The plurality of spring abutment portions 17c of the second driven plate 17 are provided such that each spring abutment portion 17c is interposed between the spring housing windows 17w (spring support portions 17a and 17b) which are adjacent to each other along the circumferential direction. In the present embodiment, as illustrated in FIG. 2, the drive member 11 is rotatably supported by the outer peripheral surface of the second driven plate 17 which is supported by the damper hub 7 via the first driven plate 16. Consequently the drive member 11 is aligned with the damper hub 7.

With the damper device 10 in the attached state, the first and second springs SP1 and SP2 are each disposed between the spring abutment portions 11c of the drive member 11 which are adjacent to each other so as to be arranged alternately along the circumferential direction of the damper device 10. In addition, the spring abutment portions 12c of the intermediate member 12 are provided between the first and second springs SP1 and SP2, which are disposed between the spring abutment portions 11c which are adjacent to each other and which are paired with each other (act in series with each other), to abut against the end portions of such first and second springs SP1 and SP2. Consequently, with the damper device 10 in the attached state, the first end portion of each first spring SP1 abuts against the corresponding spring abutment portion 11c of the drive member 11, and the second end portion of each first spring SP1 abuts against the corresponding spring abutment portion 12c of the intermediate member 12. With the damper device 10 in the attached state, in addition, the first end portion of each second spring SP2 abuts against the corresponding spring abutment portion 12c of the intermediate member 12, and the second end portion of each second spring SP2 abuts against the corresponding spring abutment portion 11c of the drive member 11.

Meanwhile, as seen from FIG. 2, the plurality of spring support portions 16a of the first driven plate 16 support (guide) side portions of the corresponding set of first and second springs SP1 and SP2 on the turbine runner 5 side from the inner peripheral side. In addition, the plurality of spring support portions 16b support (guide) the side portions of the corresponding set of first and second springs SP1 and SP2 on the turbine runner 5 side from the outer peripheral side. Further, as seen from FIG. 2, the plurality of spring support portions 17a of the second driven plate 17 support (guide) side portions of the corresponding set of first and second springs SP1 and SP2 on the lock-up piston 80 side from the inner peripheral side. In addition, the plurality of spring support portions 17b support (guide) the side portions of the corresponding set of first and second springs SP1 and SP2 on the lock-up piston 80 side from the outer peripheral side.

In addition, with the damper device 10 in the attached state, as with the spring abutment portions 11c of the drive member 11, the spring abutment portions 16c and the spring abutment portions 17c of the driven member 15 are provided between the first and second springs SP1 and SP2, which are not paired with each other (do not act in series with each other), to abut against the end portions of such first and second springs SP1 and SP2. Consequently, with the damper device 10 in the attached state, the first end portion of each first spring SP1 also abuts against the corresponding spring abutment portions 16c and 17c of the driven member 15, and the second end portion of each second spring SP2 also abuts against the corresponding spring abutment portions 16c and 17c of the driven member 15. As a result, the driven member 15 is coupled to the drive member 11 via the plurality of first springs SP1, the intermediate member 12, and the plurality of second springs SP2, and the first and second springs SP1 and SP2 which are paired with each other are coupled in series with each other via the spring abutment portion 12c of the intermediate member 12 between the drive member 11 and the driven member 15. In the present embodiment, the distance between the axis of the starting device 1 and the damper device 10 and the axis of the first springs SP1 and the distance between the axis of the starting device 1 etc. and the axis of the second springs SP2 are equal to each other.

The damper device 10 according to the present embodiment further includes: a first stopper that regulates relative rotation between the intermediate member 12 and the driven member 15 and deflection of the second springs SP2; and a second stopper that regulates relative rotation between the drive member 11 and the driven member 15. The first stopper is configured to regulate relative rotation between the intermediate member 12 and the driven member 15 when torque transferred from the engine EG to the drive member 11 has reached torque (first threshold) T1 that is determined in advance and that is less than torque T2 (second threshold) corresponding to a maximum torsional angle of the damper device 10. In addition, the second stopper is configured to regulate relative rotation between the drive member 11 and the driven member 15 when torque transferred to the drive member 11 has reached the torque T2 corresponding to the maximum torsional angle. Consequently, the damper device 10 has damping characteristics in two stages. The first stopper may be configured to regulate relative rotation between the drive member 11 and the intermediate member 12 and deflection of the first springs SP1. The damper device 10 may also be provided with: a stopper that regulates relative rotation between the drive member 11 and the intermediate member 12 and deflection of the first springs SP1; and a stopper that regulates relative rotation between the intermediate member 12 and the driven member 15 and deflection of the second springs SP2.

The vibration damping device 20 is coupled to the driven member 15 of the damper device 10, and disposed inside a fluid transmission chamber 9 filled with working oil. As illustrated in FIGS. 2 to 6, the vibration damping device 20 includes: the first driven plate 16 which serves as a support member; a plurality of (e.g. three in the present embodiment) weight bodies 22 that serve as a restoring force generation member coupled to the first driven plate 16 so as to transmit and receive torque to and from the first driven plate 16; and an annular inertial mass body 23 coupled to each of the weight bodies 22.

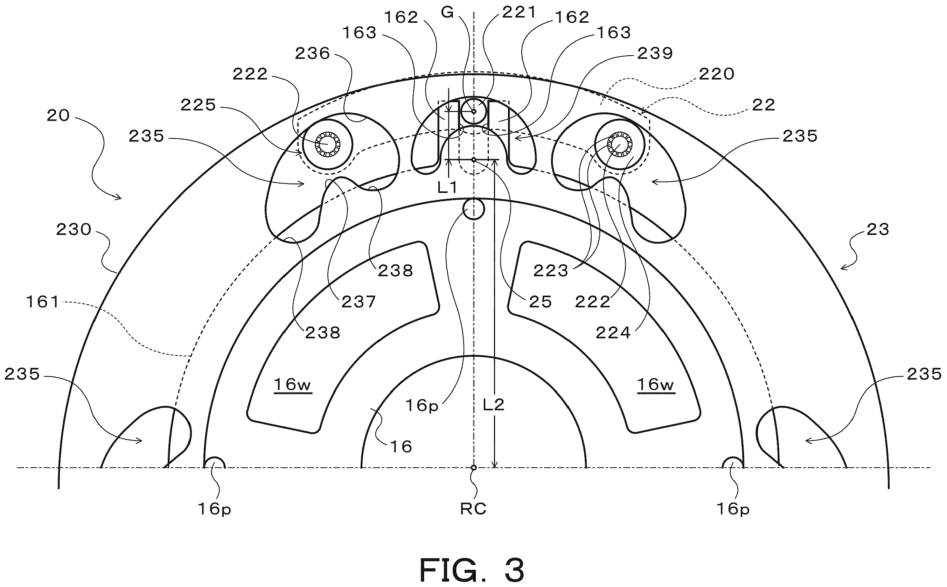

As illustrated in FIG. 3, the first driven plate 16 has a plurality of (e.g. six in the present embodiment) projecting portions 162 formed side by side in pairs at intervals in the circumferential direction to project radially outward from an outer peripheral surface 161 of the first driven plate 16. Respective inner surfaces 163 of the two projecting portions 162 which are paired with each other extend in the radial direction of the first driven plate 16, and face each other in the circumferential direction of the first driven plate 16 with a clearance therebetween, functioning as torque transfer surfaces that transmit and receive torque to and from the weight bodies 22.

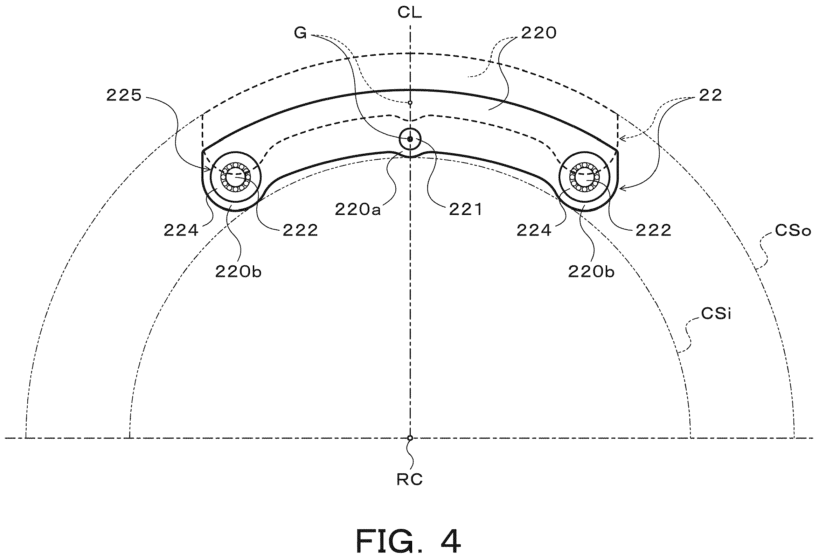

As illustrated in FIGS. 3 to 6, each of the weight bodies 22 has two plate members (mass bodies) 220 that have the same shape as each other, one first coupling shaft 221, and two second coupling shafts 222. As illustrated in FIG. 3, each of the plate members 220 is formed from a metal plate that has a bilaterally symmetrical and arcuate planar shape, and the two plate members 220 are coupled so as to face each other in the axial direction of the first driven plate 16 via the one first coupling shaft 221 and the two second coupling shafts 222. As illustrated in FIG. 4, each of the plate members 220 has an outer peripheral surface formed from a circular column surface CSo and an inner peripheral surface in a recessed curved surface shape. The inner peripheral surface of each of the plate members 220 includes: a projecting portion 220a provided at the middle portion in the width direction of the plate member 220, that is, in the vicinity of the first coupling shaft 221, to project in the direction away from the outer peripheral surface; and two projecting portions 220b provided at one end portion and the other end portion of the plate member 220 to project in the direction away from the outer peripheral surface. In the present embodiment, the projecting portions 220a and 220b each have a surface in a circular column surface shape, and the surfaces of the projecting portions 220a and 220b contact a circular column surface CSi as illustrated in FIG. 4.

The first coupling shaft 221 is formed in a solid (or hollow) round bar shape, and fixed (coupled) to the two plate members 220 such that the axis of the first coupling shaft 221 passes through a center of gravity G of the weight body 22 on a center line CL (a line that passes through a center of rotation RC of the first driven plate 16 with the weight body 22 in the attached state, see FIG. FIG. 4) in the width direction (the circumferential direction of the first driven plate 16 etc.) of the weight body 22 (plate members 220) as illustrated in FIG. 3. The first coupling shaft 221 has an outside diameter that is smaller than the clearance between the two projecting portions 162 (inner surfaces 163), which are paired with each other, of the first driven plate 16 and the radial length of the inner surfaces 163, and is slidably disposed between the pair of projecting portions 162 so as to contact one of the inner surfaces 163 of the projecting portions 162. Consequently, each of the weight bodies 22 is coupled so as to be movable in the radial direction with respect to the first driven plate 16 which serves as a support member, constituting a sliding pair with the first driven plate 16. Further, the first coupling shaft 221 can abut against one of the inner surfaces 163 of the pair of projecting portions 162 to function as a torque transfer portion that transmits and receives torque to and from the first driven plate 16. The first coupling shaft 221 may rotatably support a cylindrical outer ring via a plurality of rollers or balls (rolling elements), and may rotatably support the outer ring not via the rolling elements.

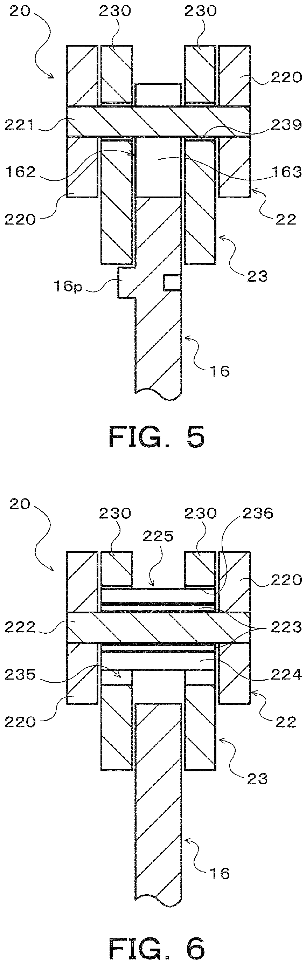

The two second coupling shafts 222 of each of the weight bodies 22 are formed in a solid (or hollow) round bar shape, and fixed to the one end portion and the other end portion of the two plate members 220 so as to be positioned symmetrically with respect to the center line CL of the weight body 22 (plate members 220) which passes through the center of gravity G as illustrated in FIG. 3. That is, the respective axes of the two second coupling shafts 222 which are fixed to the two plate members 220 are positioned symmetrically with respect to the center line CL in the width direction of the weight body 22. Further, as illustrated in FIGS. 3 and 6, each of the second coupling shafts 222 rotatably supports a cylindrical outer ring (roller) 224 via a plurality of rollers (rolling elements) 223, and the second coupling shaft 222, the plurality of rollers 223, and the outer ring 224 constitute a guided portion 225 of the weight body 22. In the present embodiment, as illustrated in FIG. 4, the projecting portions 220b are formed at both end portions of each of the plate members 220, and thus the outer periphery of the outer ring 224 does not protrude to the outer side of the peripheral edge portion of the plate member 220. A plurality of balls may be disposed between the second coupling shaft 222 and the outer ring 224 in place of the plurality of rollers 223, or such rollers or balls may be omitted.

The inertial mass body 23 includes two annular members 230 each formed from a metal plate. The weight of the inertial mass body 23 (two annular members 230) is determined to be sufficiently larger than the weight of one weight body 22. As illustrated in FIGS. 3 and 6, each of the annular members 230 has a plurality of (e.g. six in the present embodiment) guide portions 235 disposed side by side in pairs at intervals in the circumferential direction. Each of the guide portions 235 is an opening portion that extends arcuately, and guides the guided portion 225 of the corresponding weight body 22. In the present embodiment, the two guide portions 235 which are paired with each other are formed in the annular member 230 symmetrically with respect to a line (a line that divides the annular member 230 into a number of equal parts, the number corresponding to the number of the weight bodies 22) that extends radially so as to trisect the annular member 230 about the center.

As illustrated in FIG. 3, each of the guide portions 235 includes: a guide surface 236 in a recessed curved surface shape that serves as a rolling surface for the outer ring 224 which constitutes the guided portion 225 of the weight body 22; a support surface 237 in a projecting curved surface shape provided on the inner peripheral side of the annular member 230 (on the side of the center of the annular member 230) with respect to the guide surface 236 to face the guide surface 236; and two stopper surfaces 238 that are provided on both sides of and continuous with the guide surface 236 and the support surface 237. The guide surface 236 is formed such that the center of gravity G of the weight body 22 is swung along the radial direction with respect to (moved closer to and away from) the center of rotation RC of the first driven plate 16 and swung about a virtual axis 25, the position of which relative to the inertial mass body 23 is determined to be invariable, while keeping an interaxial distance L1 from the virtual axis 25 constant when the outer ring 224 rolls on the guide surface 236 along with rotation of the first driven plate 16. The virtual axis 25 is a line that is orthogonal to the annular member 230 and that passes through a point on a corresponding one of lines that extend radially so as to trisect the annular member 230 about the center (lines that divide the annular member 230 into a number of equal parts, the number corresponding to the number of the weight bodies 22), the point being away from the center (center of rotation RC) of the annular member 230 by an interaxial distance L2 determined in advance. The support surface 237 is a recessed curved surface formed so as to face the guide surface 236 with a clearance determined to be slightly larger than the outside diameter of the outer ring 224. The stopper surfaces 238 are recessed curved surfaces that extend arcuately, for example.

As illustrated in FIG. 6, the two annular members 230 of the inertial mass body 23 are disposed coaxially with the first driven plate 16 on both sides in the axial direction of the first driven plate 16, with one annular member 230 on each side, such that the corresponding guide portions 235 face each other in the axial direction of the annular members 230, and coupled to each other via a coupling member (not illustrated). Further, the inner peripheral surface of each of the annular members 230 is supported by a plurality of protrusions 16p (see FIGS. 3 and 5) provided on the first driven plate 16 so as to project in the axial direction. Consequently, each of the annular members 230 (inertial mass body 23) is supported by the first driven plate 16 so as to be rotatable about the center of rotation RC, constituting a turning pair with the first driven plate 16.

In addition, the two plate members 220 of the weight body 22 are disposed so as to face each other in the axial direction via the corresponding pair of projecting portions 162 of the first driven plate 16 and the two annular members 230, and coupled to each other by the first and second coupling shafts 221 and 222. As illustrated in FIGS. 3 and 5, an opening portion 239 that extends arcuately is formed in each of the annular members 230 of the inertial mass body 23, and the first coupling shaft 221 of the weight body 22 is inserted through the opening portion 239. In the present embodiment, the inner surface of the opening portion 239 is formed so as not to contact the first coupling shaft 221. Further, each of the second coupling shafts 222 which couple the two plate members 220 to each other penetrates the corresponding guide portions 235 of the two annular members 230 as illustrated in FIG. 6, and each of the outer rings 224 is disposed in the corresponding guide portions 235 of the two annular members 230.

In the vibration damping device 20, as discussed above, the weight body 22 and the first driven plate 16 constitute a sliding pair, and the first driven plate 16 and the inertial mass body 23 constitute a turning pair. Further, with the outer rings 224 of each of the weight bodies 22 rollable on the guide surfaces 236 of the corresponding guide portions 235, each of the weight bodies 22 and the inertial mass body 23 constitute a sliding pair. Consequently, the first driven plate 16, the plurality of weight bodies 22, and the inertial mass body 23 which has the guide portions 235 constitute a slider crank mechanism (double slider crank chain). The vibration damping device 20 is in the equilibrium state when the center of gravity G of each of the weight bodies 22 is positioned on a line that passes through the corresponding virtual axis 25 and the center of rotation RC (see FIG. 3). In the present embodiment, in addition, the first driven plate 16 which serves as a support member is disposed as offset in the axial direction from each of the weight bodies 22 and the inertial mass body 23.

Subsequently, operation of the starting device 1 which includes the vibration damping device 20 will be described. In the starting device 1, when lock-up is released by the lock-up clutch 8, as seen from FIG. 1, torque (power) from the engine EG which serves as a motor is transferred to the input shaft IS of the transmission TM via a path that includes the front cover 3, the pump impeller 4, the turbine runner 5, and the damper hub 7. Meanwhile, when lock-up is established by the lock-up clutch 8, as seen from FIG. 1, torque (power) from the engine EG is transferred to the input shaft IS of the transmission TM via a path that includes the front cover 3, the lock-up clutch 8, the drive member 11, the first springs SP1, the intermediate member 12, the second springs SP2, the driven member 15, and the damper hub 7.

When the drive member 11 which is coupled to the front cover 3 by the lock-up clutch 8 is rotated along with rotation of the engine EG while lock-up is established by the lock-up clutch 8, the first and second springs SP1 and SP2 act in series with each other via the intermediate member 12 between the drive member 11 and the driven member 15 until torque transferred to the drive member 11 reaches the torque T1. Consequently, torque from the engine EG transferred to the front cover 3 is transferred to the input shaft IS of the transmission TM, and fluctuations in torque from the engine EG are damped (absorbed) by the first and second springs SP1 and SP2 of the damper device 10. When torque transferred to the drive member 11 becomes equal to or more than the torque T1, meanwhile, fluctuations in torque from the engine EG are damped (absorbed) by the first springs SP1 of the damper device 10 until the torque reaches the torque T2.

In the starting device 1, further, when the damper device 10, which is coupled to the front cover 3 by the lock-up clutch 8 along with establishment of lock-up, is rotated together with the front cover 3, the first driven plate 16 (driven member 15) of the damper device 10 is also rotated in the same direction as the front cover 3 about the axis of the starting device 1. When the first driven plate 16 is rotated, the first coupling shaft 221 of each of the weight bodies 22 abuts against one of the inner surfaces 163 of the corresponding pair of projecting portions 162 in accordance with the rotational direction of the first driven plate 16. In addition, the outer rings 224 which are supported by the second coupling shafts 222 of the weight body 22 are pressed against the guide surfaces 236 of the corresponding guide portions 235 of the inertial mass body 23 by the action of a centrifugal force on the weight body 22, and rolled toward one end portion of the guide portions 235 on the guide surfaces 236 upon receiving a force due to the moment of inertia (difficulty to rotate) of the inertial mass body 23.

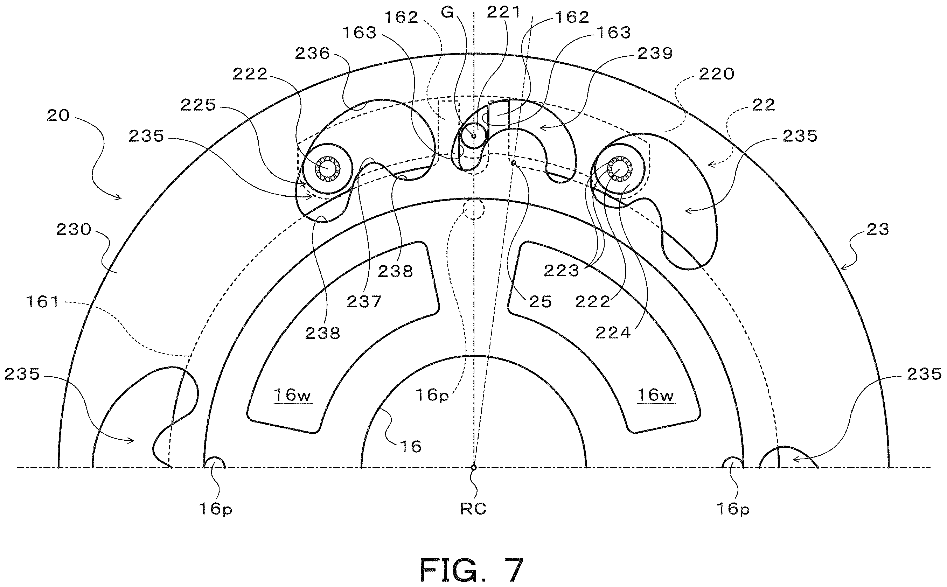

Consequently, as illustrated in FIG. 7, when the first driven plate 16 is rotated in one direction (e.g. counterclockwise in the drawing) about the center of rotation RC, each of the weight bodies 22 (center of gravity G) approaches the center of rotation RC along the radial direction of the first driven plate 16 while being guided by the two (pair of) guided portions 225 (outer rings 224 and second coupling shafts 222) and the two (pair of) guide portions 235 so that rotation of the weight body 22 is regulated. Further, with the guided portions 225 guided by the guide portions 235, the center of gravity G of each of the weight bodies 22 is rotated about the virtual axis 25 while keeping the interaxial distance L1 constant, and accordingly the inertial mass body 23 is rotated about the center of rotation RC in the direction opposite to the first driven plate 16.

A component force of a centrifugal force that acts on the center of gravity G of each of the weight bodies 22 is transferred to the inertial mass body 23 via the guided portions 225 (outer rings 224) and the guide surfaces 236 of the guide portions 235 to serve as a restoring force for returning the inertial mass body 23 to a position in the equilibrium state. Such a restoring force overcomes a force (moment of inertia) that acts to rotate the inertial mass body 23 in the rotational direction in which the inertial mass body 23 has been rotated so far at an end portion of a swing range of the weight body 22 determined in accordance with the amplitude (vibration level) of vibration transferred from the engine EG to the first driven plate 16 (driven member 15). Consequently, each of the weight bodies 22 is moved in the direction opposite to the direction in which the weight body 22 has been moved so as to be away from the center of rotation RC along the radial direction of the first driven plate 16 while being guided by the pair of guided portions 225 and the pair of guide portions 235 so that rotation of the weight body 22 is regulated. Further, the inertial mass body 23 is rotated in the direction opposite to the direction in which the inertial mass body 23 has been rotated so far about the center of rotation RC toward the position in the equilibrium state while being moved in conjunction with each of the weight bodies 22 by the action of the restoring force from each of the weight bodies 22, that is, the component force of the centrifugal force.

When the inertial mass body 23 reaches the position in the equilibrium state with the first driven plate 16 rotated in the one direction, the inertial mass body 23 is urged to be further rotated in the same direction by the moment of inertia (difficulty to stop). In addition, the outer rings 224 of the weight body 22 are rolled toward the other end portion of the guide portions 235 on the guide surfaces 236 upon receiving a force due to the moment of inertia (difficulty to stop) of the inertial mass body 23. Consequently, each of the weight bodies 22 (center of gravity G) approaches the center of rotation RC again along the radial direction of the first driven plate 16 while being guided by the pair of guided portions 225 and the pair of guide portions 235 so that rotation of the weight body 22 is regulated. Further, with the guided portions 225 guided by the guide portions 235, the center of gravity G of each of the weight bodies 22 is rotated about the virtual axis 25 while keeping the interaxial distance L1 constant, and accordingly the inertial mass body 23 is rotated about the center of rotation RC in the same direction as the first driven plate 16.

Also in this case, a component force of a centrifugal force that acts on the center of gravity G of each of the weight bodies 22 is transferred as the restoring force to the inertial mass body 23 via the guided portions 225 and the guide surfaces 236 of the guide portions 235 to overcome a force (moment of inertia) that acts to rotate the inertial mass body 23 in the rotational direction in which the inertial mass body 23 has been rotated so far at an end portion of the swing range. Consequently, each of the weight bodies 22 is moved away from the center of rotation RC along the radial direction of the first driven plate 16 while being guided by the pair of guided portions 225 and the pair of guide portions 235 so that rotation of the weight body 22 is regulated. In addition, the inertial mass body 23 is rotated about the center of rotation RC toward the position in the equilibrium state while being moved in conjunction with each of the weight bodies 22 by the action of the restoring force from each of the weight bodies 22, that is, the component force of the centrifugal force.

In this way, when the first driven plate 16 (driven member 15) is rotated in one direction, each of the weight bodies 22, which serve as a restoring force generation member, of the vibration damping device 20 is swung (makes reciprocal motion) with respect to the center of rotation RC along the radial direction of the first driven plate 16 within a swing range centered on the position in the equilibrium state which is determined in accordance with the amplitude (vibration level) of vibration transferred from the engine EG to the driven member 15. In addition, a component force of a centrifugal force that acts on each of the weight bodies 22 via the guided portions 225 and the guide portions 235 is transferred to the inertial mass body 23 as a restoring force, and the inertial mass body 23 is swung (makes reciprocal rotational motion) in the direction opposite to the first driven plate 16 about the center of rotation RC within a swing range centered on the position in the equilibrium state which is determined in accordance with the swing range of each of the weight bodies 22.

Consequently, torque (inertia torque) that is opposite in phase to fluctuation torque (vibration) transferred from the engine EG to the drive member 11 can be applied from the inertial mass body 23 which is swung to the first driven plate 16 via the guide portions 235, the guided portions 225, the weight bodies 22, the first coupling shafts 221, and the projecting portions 162. As a result, it is possible for the vibration damping device 20 to damp vibration transferred from the engine EG to the driven member 15 (first driven plate 16) well, irrespective of the rotational speed of the engine EG (first driven plate 16), by determining the specifications of the vibration damping device 20 so as to have an order that matches the order (excitation order: 1.5th order in the case where the engine EG is a three-cylinder engine, and second order in the case where the engine EG is a four-cylinder engine) of vibration transferred from the engine EG to the first driven plate 16.

In the vibration damping device 20, each of the weight bodies 22 has two (a pair of) guided portions 225 disposed with a clearance therebetween in the width direction (circumferential direction of the first driven plate 16 etc.), and motion of each of the weight bodies 22 is regulated (restrained) by the two guided portions 225 and two (a pair of) guide portions 235 of the inertial mass body 23 corresponding to the two guided portions 225. Consequently, it is possible to suppress a reduction in the order of the vibration damping device 20 due to an increase in the equivalent mass due to rotation of each of the weight bodies 22 by regulating rotation of the weight body 22 with the pair of guided portions 225 and the pair of guide portions 235, and to suppress damping of a centrifugal force (a component force thereof) which acts on the weight body 22 and which is used as a restoring force for swinging the inertial mass body 23 by smoothly swinging the weight body 22 with respect to the first driven plate 16. Further, a good vibration damping effect can be obtained by securing a sufficient weight of the inertial mass body 23 by suppressing a reduction in the order due to rotation of the weight body 22. Additionally, it is possible to reduce a friction force generated between the first coupling shaft 221 and the projecting portions 162 of the first driven plate 16 when torque is tranferred between each of the weight bodies 22 and the first driven plate 16 by regulating (restraining) motion of each of the weight bodies 22 with the pair of guided portions 225 and the pair of guide portions 235.

In the vibration damping device 20, further, each of the weight bodies 22 includes the two plate members 220 which are coupled so as to face each other in the axial direction of the first driven plate 16, and the inertial mass body 23 is disposed between the two plate members 220 in the axial direction. Consequently, both the inertial mass body 23 and the plate members 220 can be disposed on the outer peripheral side of the vibration damping device 20. Thus, a centrifugal force that acts on each of the weight bodies 22 can be further increased, and the moment of inertia of the inertial mass body 23 can be further increased. In addition, it is also possible to increase the weight of the weight bodies 22 and set the center of gravity G of each of the weight bodies 22 further on the radially outer side by securing the installation space for and the weight of the weight bodies 22 (plate members 220) well. Further, by disposing the inertial mass body 23 between the two plate members 220 in the axial direction, the degree of freedom in the setting of the shape and the position of the center of gravity of the weight bodies 22 can be improved, and each of the weight bodies 22 and the inertial mass body 23 can be provided with the guided portions 225 and the guide portions 235 while easily coupling the two plate members 220 to each other. As a result, it is possible to further improve the vibration damping performance of the vibration damping device 20 which includes the weight bodies 22 which are swung in the radial direction of the first driven plate 16 along with rotation of the first driven plate 16.

In each of the weight bodies 22, in addition, the two guided portions 225 are disposed symmetrically with respect to the center line CL in the width direction (circumferential direction) of the plate members 220, and the first coupling shaft 221 which serves as a torque transfer portion is installed on the center line CL. Consequently, it is possible to swing the weight body 22 more smoothly while regulating rotation thereof with the pair of guide portions 235 and the pair of guided portions 225, and to suppress damping of a centrifugal force that acts on the weight body 22 well by reducing a friction force generated between the first coupling shaft 221 and the projecting portions 162. It should be noted, however, that in the case where each of the weight bodies 22 is coupled to the first driven plate 16 so as to transmit and receive torque to and from the first driven plate 16 via the first coupling shaft 221 and the pair of projecting portions 162, rotation of each of the weight bodies 22 can be regulated by the first coupling shaft 221 and the projecting portions 162 and a set of the guided portions 225 and the guide portions 235. Thus, one guided portion 225 and one guide portion 235 may be provided for one weight body 22. Alternatively, three or more guided portions 225 and three or more guide portions 235 may be provided for one weight body 22.

In the vibration damping device 20, further, the first driven plate 16 which serves as a support member is disposed as offset in the axial direction from each of the weight bodies 22 and the inertial mass body 23. Consequently, interference between each of the weight bodies 22 or the inertial mass body 23 and the first driven plate 16 in the radial direction can be eliminated. Thus, it is possible to further increase a centrifugal force that acts on each of the weight bodies 22, and to further increase the moment of inertia of the inertial mass body 23, by securing an installation space for each of the weight bodies 22 and the inertial mass body 23 better.

In the vibration damping device 20, in addition, the inertial mass body 23 includes the two annular members 230 which are disposed so as to face each other in the axial direction of the first driven plate 16, and the first driven plate 16 is disposed between the two annular members 230 in the axial direction. Consequently, it is possible to further improve the vibration damping performance of the vibration damping device 20 by further increasing the moment of inertia of the inertial mass body 23.

Further, as illustrated in FIG. 4, the center of curvature of the circular column surface CSi, which is a curved surface that contacts the projecting portions 220a and 220b which are formed on the inner peripheral surface of the plate members 220 of each of the weight bodies 22, coincides with the center of rotation RC when the weight body 22 is positioned on the innermost side (see the solid line in FIG. 4), in the radial direction, of the swing range. Consequently, it is possible to suppress interference between each of the weight bodies 22 which are swung and a member disposed on the radially inner side of the weight body 22 well, and to secure the weight of the weight body 22 well by bringing the inner peripheral surface of the weight body 22 closer to the center of rotation RC. It should be noted, however, that the inner peripheral surface of the plate members 220 of each of the weight bodies 22 may be formed in a recessed circular column surface shape. In this case, the center of curvature of the inner peripheral surface of the plate members 220 may coincide with the center of rotation RC when the weight body 22 is positioned on the innermost side, in the radial direction, of the swing range. In addition, as illustrated in FIG. 4, the center of curvature of the outer peripheral surface of the plate members 220 of each of the weight bodies 22, that is, the circular column surface CSo, coincides with the center of rotation RC when the weight body 22 is positioned on the outermost side (see the broken line in FIG. 4), in the radial direction, of the swing range. Consequently, the swing range of each of the weight bodies 22 can be secured sufficiently.

In the vibration damping device 20, in addition, the guided portions 225 are formed on the weight bodies 22, and the guide portions 235 are formed in the inertial mass body 23. Consequently, it is possible to secure the vibration damping performance well by suppressing a reduction in a centrifugal force that acts on the weight bodies 22, that is, a restoring force that acts on the inertial mass body 23, by placing the center of gravity G of the weight bodies 22 away from the center of rotation RC. It should be noted, however, that in the vibration damping device 20, the guide portions 235 may be provided in the weight bodies 22, and the guided portions 225 may be formed on the inertial mass body 23.

Further, each of the guided portions 225 includes the second coupling shaft 222 which is supported by the weight body 22, that is, the two plate members 220, and the outer ring 224 which is rotatably supported by the second coupling shaft 222, and each of the guide portions 235 includes the guide surface 236 in a recessed curved surface shape on which the outer ring 224 rolls. Consequently, it is possible to suppress damping of a centrifugal force that acts on the weight bodies 22 significantly well by swinging the weight bodies 22 more smoothly.

In the vibration damping device 20, in addition, the first driven plate 16 has the pair of inner surfaces 163 which extend in the radial direction and which are formed so as to face each other in the circumferential direction of the first driven plate 16 with a clearance therebetween as torque transfer surfaces that transmit and receive torque to and from the weight body 22. In addition, each of the weight bodies 22 has the first coupling shaft 221 which is disposed between the pair of inner surfaces 163 (projecting portions 162) so as to abut against one of the pair of inner surfaces 163 of the first driven plate 16 as a torque transfer portion that transmits and receives torque to and from the first driven plate 16. Consequently, it is possible to couple the first driven plate 16 and the weight bodies 22 so as to transfer torque between each other, and to reduce a friction force generated between the coupling portions of the first driven plate 16 and the weight bodies 22, that is, the inner surfaces 163 and the first coupling shaft 221.

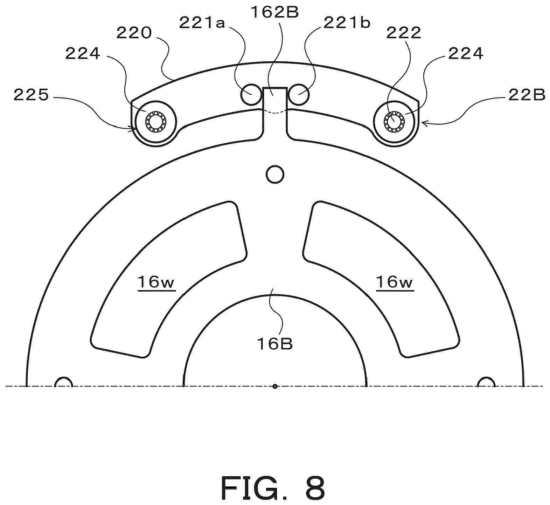

It should be noted, however, that as illustrated in FIG. 8, a weight body 22B may include two first coupling shafts (first torque transfer portions) 221a and 221b disposed with a clearance therebetween in the width direction (circumferential direction) of the weight body 22B (plate members 220), and a first driven plate 16B that serves as a support member may include a projecting portion (second torque transfer portion) 162B that extend in the radial direction and that are disposed between the two first coupling shafts 221a and 221b. In the example in FIG. 8, the projecting portion 162B has a width that is slightly smaller than the clearance between the first coupling shafts 221a and 221b, and is slidably disposed between the first coupling shafts 221a and 221b so as to abut against one of the first coupling shafts 221a and 221b of the weight body 22B. Also when such a configuration is adopted, it is possible to couple the first driven plate 16 and the weight bodies 22 so as to transfer torque between each other, and to reduce a friction force generated between the coupling portions of the first driven plate 16 and the weight bodies 22, that is, the projecting portion 162B and the first coupling shaft 221a or 221b.

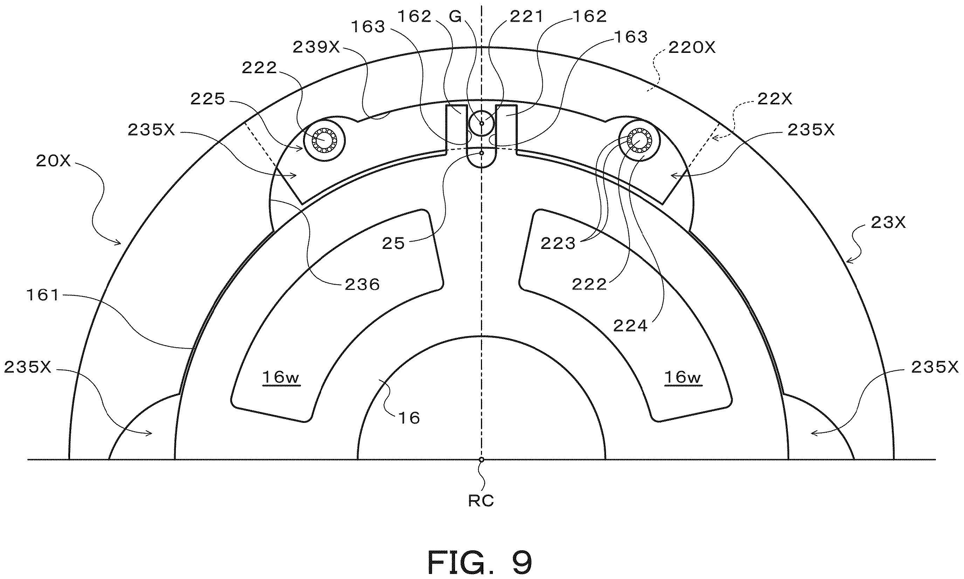

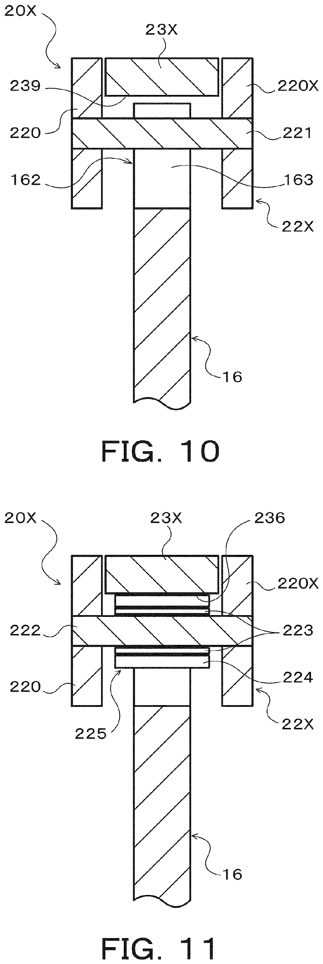

FIG. 9 is an enlarged view illustrating another vibration damping device 20X according to the present disclosure. FIGS. 10 and 11 are each an enlarged sectional view illustrating an essential portion of the vibration damping device 20X. Constituent elements of the vibration damping device 20X that are identical to the elements of the vibration damping device 20 discussed above are given the same numerals to omit redundant descriptions.

In the vibration damping device 20X illustrated in FIGS. 9 to 11, a single annular member is used as an inertial mass body 23X. In addition, guide portions 235X of the inertial mass body 23X are notched portions that have only guide surfaces 236 in a recessed curved surface shape, and correspond to the guide portions 235 of the vibration damping device 20 from which the support surfaces 237 and the stopper surfaces 238 have been omitted. Further, a recessed portion 239X is formed in the inner peripheral surface of the inertial mass body 23X so as to be positioned between the two guide portions 235X, which are paired with each other, in the circumferential direction. The inertial mass body 23X is disposed between two plate members 220X of a weight body 22X in the axial direction so as to surround the first driven plate 16, and the inner peripheral surface (excluding the guide portions 235X and the recessed portion 239X) of the inertial mass body 23X is rotatably supported by the outer peripheral surface 161 of the first driven plate 16. In addition, each of the projecting portions 162 of the first driven plate 16 and the first coupling shaft 221 of each of the weight bodies 22X are disposed on the radially inner side of the recessed portion 239X of the inertial mass body 23X.

Also with such a vibration damping device 20X, it is possible to obtain functions and effects that are similar to those of the vibration damping device 20 discussed above. In addition, the inner peripheral surface of the plate members 220X of each of the weight bodies 22X is preferably formed such that the center of curvature thereof coincides with the center of rotation RC when the weight body 22 is positioned on the innermost side (see the solid line in FIG. 4), in the radial direction, of the swing range. Consequently, it is possible to suppress interference between each of the weight bodies 22X which are swung and a member disposed on the radially inner side of the weight body 22X well, and to secure the weight of the weight body 22 well. Further, the outer peripheral surface of the plate members 220X of each of the weight bodies 22X is preferably formed such that the center of curvature thereof coincides with the center of rotation RC when the weight body 22 is positioned on the innermost side, in the radial direction, of the swing range. Consequently, the swing range of each of the weight bodies 22X can be secured sufficiently.

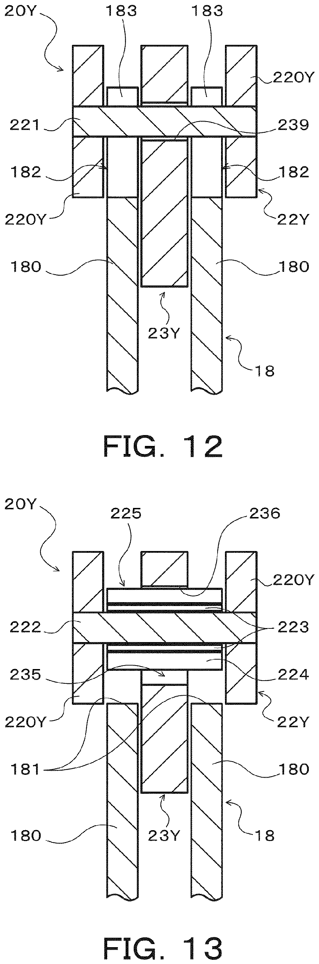

FIGS. 12 and 13 are each an enlarged sectional view illustrating an essential portion of yet another vibration damping device 20Y according to the present disclosure. Constituent elements of the vibration damping device 20Y that are identical to the elements of the vibration damping devices 20 etc. discussed above are given the same numerals to omit redundant descriptions.

The vibration damping device 20Y illustrated in FIGS. 12 and 13 includes: a plurality of weight bodies 22Y that each include two plate members 220Y; an inertial mass body 23Y which is a single annular member that has a plurality of guide portions 235 formed similarly to those of the annular member 230; and a support member 18 that has two support plates 180 disposed so as to face each other in the axial direction and that rotates coaxially and together with one of rotary elements of the damper device. Each of the support plates 180 has a plurality of projecting portions 182 formed side by side in pairs at intervals in the circumferential direction to project radially outward from an outer peripheral surface 181 of the support plate 180. In addition, the first coupling shaft 221 of each of the weight bodies 22Y is slidably disposed between the two corresponding projecting portions 182 of each of the support plates 180 so as to abut against one of inner surfaces 183 of the two projecting portions 182. As illustrated in the drawings, the two support plates 180 of the support member 18 are disposed between the two plate members 220Y of each of the weight bodies 22Y in the axial direction, and the inertial mass body 23Y is disposed between the two support plates 180 of the support member 18 in the axial direction. Also with such a vibration damping device 20Y, it is possible to obtain functions and effects that are similar to those of the vibration damping device 20 discussed above.

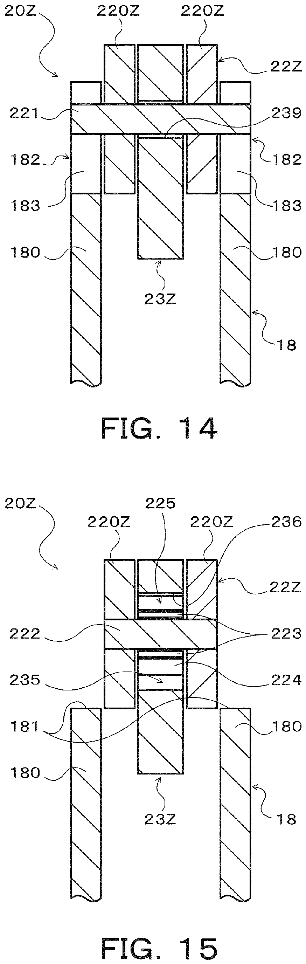

FIGS. 14 and 15 are each an enlarged sectional view illustrating an essential portion of a different vibration damping device 20Z according to the present disclosure. Constituent elements of the vibration damping device 20Z that are identical to the elements of the vibration damping devices 20 etc. discussed above are given the same numerals to omit redundant descriptions.

The vibration damping device 20Z illustrated in FIGS. 14 and 15 also includes: a plurality of weight bodies 22Z that each include two plate members 220Z; an inertial mass body 23Z which is a single annular member that has a plurality of guide portions 235 formed similarly to those of the annular member 230; and a support member 18 that has two support plates 180 disposed so as to face each other in the axial direction and that rotates coaxially and together with one of rotary elements of the damper device. As illustrated in the drawings, the two plate members 220Z of each of the weight bodies 22Z are disposed between the two support plates 180 of the support member 18 in the axial direction, and the inertial mass body 23Z is disposed between the two plate members 220Z of each of the weight bodies 22Z in the axial direction. In addition, both end portions of the first coupling shaft 221 of each of the weight bodies 22Z project outward from the plate members 220Z, and projecting portions of the first coupling shaft 221 are slidably disposed between the two corresponding projecting portions 182 of the support plate 180 so as to abut against one of the inner surfaces 183 of the two projecting portions 182. Also with such a vibration damping device 20Z, it is possible to obtain functions and effects that are similar to those of the vibration damping device 20 discussed above.

In the vibration damping devices 20, 20X, 20Y, and 20Z discussed above, the center of gravity G of each of the weight bodies 22 etc. is swung about the virtual axis 25 while keeping the interaxial distance L1 constant. However, the present disclosure is not limited thereto. That is, the vibration damping devices 20 to 20Z may be configured such that a portion of the weight bodies 22 etc. other than the center of gravity is swung about the virtual axis 25 while keeping the interaxial distance constant. In the vibration damping devices 20 to 20Z, in addition, the guide portions 235 etc. which guide the guided portions 225 may be formed so as to draw an arcuate locus when the weight bodies 22 are swung with respect to the center of rotation RC along the radial direction of the first driven plate 16.

Further, the vibration damping devices 20 to 20Z are preferably designed such that the order thereof (the order of vibration that is best damped by the vibration damping devices 20 to 20Z; hereinafter referred to as an "effective order q_{eff}") is larger than the sum of an excitation order q_{tag} of the engine EG and an offset value Δq determined in consideration of the effect of oil in the fluid transmission chamber 9. The experiments and the analyses conducted by the inventors revealed that the offset value Δq had a value in the range of 0.05×q_{tag} < Δq ≤ 0.20×q_{tag} although the value was fluctuated in accordance with the torque ratio or the torque capacity of the starting device 1 (fluid transmission apparatus), the capacity of the fluid transmission chamber 9, etc. Further, the vibration damping devices 20 and 20X are preferably designed such that a reference order q_{ref}, which is a convergent value of the effective order q_{eff} at the time when the amplitude of vibration of input torque transferred to the driven member 15 (first driven plate 16) becomes smaller, is higher than the excitation order q_{tag}. In this case, the vibration damping devices 20 and 20X may be configured so as to meet 1.00×qtag < qref ≤ 1.03×qtag, more preferably 1.01×qtag≤ qref ≤ 1.02×qtag. In addition, the vibration damping devices 20 and 20X may be configured such that the reference order q_{ref} becomes higher as the amplitude of vibration of input torque transferred from the engine EG to the driven member 15 (first driven plate 16) becomes larger. In this case, the difference between the effective order q_{eff} at the time when the amplitude of vibration of input torque is maximum and the excitation order q_{tag} of the engine EG may be less than 50% of the excitation order, and may be less than 20% of the excitation order. Further the interaxial distances L1 and L2 discussed above may meet L1/(L1 + L2) ≥ α + β·n. It should be noted, however, that "n" indicates the number of cylinders of the engine EG, and "α" and "β" are each a constant determined in advance.

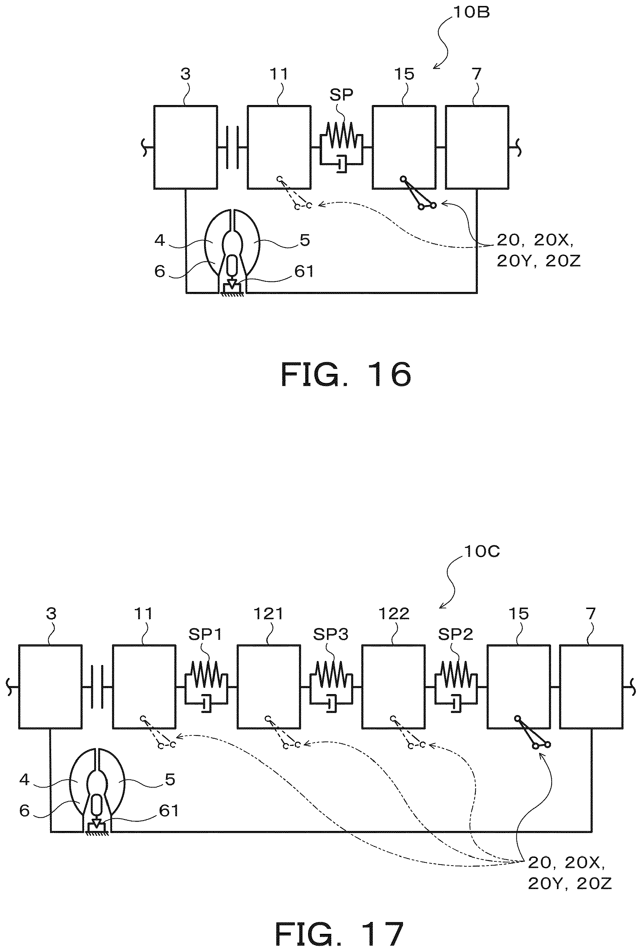

The vibration damping devices 20 to 20Z may be coupled to the intermediate member 12 of the damper device 10, or may be coupled to the drive member (input element) 11 (see the dash-double-dot line in FIG. 1). In addition, the vibration damping devices 20 to 20Z may be applied to a damper device 10B illustrated in FIG. 16. The damper device 10B in FIG. 16 corresponds to the damper device 10 from which the intermediate member 12 has been omitted, and includes the drive member (input element) 11 and the driven member 15 (output element) as rotary elements, and also includes a spring SP disposed between the drive member 11 and the driven member 15 as a torque transfer element. In this case, the vibration damping devices 20 to 20Z may be coupled to the driven member 15 of the damper device 10B as illustrated in the drawing, or may be coupled to the drive member 11 as indicated by the dash-double-dot line in the drawing.

Further, the vibration damping devices 20 to 20Z may be applied to a damper device 10C illustrated in FIG. 17. The damper device 10C in FIG. 17 includes the drive member (input element) 11, a first intermediate member (first intermediate element) 121, a second intermediate member (second intermediate element) 122, and the driven member (output element) 15 as rotary elements, and also includes a first spring SP1 disposed between the drive member 11 and the first intermediate member 121, a second spring SP2 disposed between the second intermediate member 122 and the driven member 15, and a third spring SP3 disposed between the first intermediate member 121 and the second intermediate member 122 as torque transfer elements. In this case, the vibration damping devices 20 and 20X may be coupled to the driven member 15 of the damper device 10C as illustrated in the drawing, or may be coupled to the first intermediate member 121, the second intermediate member 122, or the drive member 11 as indicated by the dash-double-dot line in the drawing. In any case, by coupling the vibration damping device 20 to 20Z to a rotary element of the damper device 10, 10B, or 10C, it is possible to damp vibration significantly well using both the damper device 10 to 10C and the vibration damping device 20 to 20Z.

As has been described above, the present disclosure provides a vibration damping device (20, 20X, 20Y, 20Z) that includes: a support member (16, 16B, 18) that rotates together with a rotary element (11, 12, 121, 122, 15), to which torque from an engine (EG) is transferred, about a center of rotation (RC) of the rotary element (11, 12, 121, 122, 15); a restoring force generation member (22, 22B, 22X, 22Y, 22Z) that is coupled to the support member (16, 16B, 18) so as to transmit and receive torque to and from the support member (16, 16B, 18) and that is swingable along a radial direction of the support member (16, 16B, 18) along with rotation of the support member (16, 16B, 18); and an inertial mass body (23, 23X, 23Y, 23Z) coupled to the support member (16, 16B, 18) via the restoring force generation member (22, 22B, 22X, 22Y, 22Z) and swung about the center of rotation (RC) in conjunction with the restoring force generation member (22, 22B, 22X, 22Y, 22Z) along with rotation of the support member (16, 16B, 18), the vibration damping device (20, 20X, 20Y, 20Z) including: a guided portion (225) provided on one of the restoring force generation member (22, 22B, 22X, 22Y, 22Z) and the inertial mass body (23, 23X, 23Y, 23Z); and a guide portion (235, 235X) formed in the other of the restoring force generation member (22, 22B, 22X, 22Y, 22Z) and the inertial mass body (23, 23X, 23Y, 23Z), the guide portion (235, 235X) guiding the guided portion (225) such that the restoring force generation member (22, 22B, 22X, 22Y, 22Z) is swung along the radial direction with respect to the center of rotation (RC) and the inertial mass body (23, 23X, 23Y, 23Z) is swung about the center of rotation (RC) when the support member (16, 16B, 18) is rotated, and a component force of a centrifugal force that acts on the restoring force generation member (22, 22B, 22X, 22Y, 22Z) being transferred from the guided portion (225) to the guide portion (235, 235X), in which the restoring force generation member (22, 22B, 22X, 22Y, 22Z) includes two mass bodies (220, 220X, 220Y, 220Z) coupled so as to face each other in an axial direction of the support member (16, 16B, 18) and disposed on both sides of the inertial mass body (23, 23X, 23Y, 23Z) in the axial direction.

In the vibration damping device according to the present disclosure, when the support member rotates together with the rotary element, the restoring force generation member is swung along the radial direction of the support member with the guided portion, which is formed on one of the restoring force generation member and the inertial mass body, guided by the guide portion, which is formed in the other of the restoring force generation member and the inertial mass body. When the support member rotates together with the rotary element, in addition, a component force of a centrifugal force that acts on the restoring force generation member is transferred to the inertial mass body via the guided portion and the guide portion, and the inertial mass body is swung about the center of rotation in conjunction with the restoring force generation member with the guided portion guided by the guide portion. Consequently, it is possible to damp vibration of the rotary element well by applying torque (inertia torque), which is opposite in phase to fluctuation torque transferred from the engine to the rotary element, to the support member via the restoring force generation member. In the vibration damping device according to the present disclosure, in addition, motion of the restoring force generation member, which is coupled to the support member, is regulated (restrained) by the guided portion and the guide portion which are formed on the restoring force generation member and the inertial mass body. Consequently, a reduction in the order of the vibration damping device due to rotation of the restoring force generation member can be suppressed by regulating rotation of the restoring force generation member, and damping of a centrifugal force (a component force thereof) that acts on the restoring force generation member, which is used as a restoring force for swinging the inertial mass body, can be suppressed by smoothly swinging the restoring force generation member with respect to the support member. Further, the restoring force generation member includes two mass bodies coupled so as to face each other in an axial direction of the support member and disposed on both sides of the inertial mass body in the axial direction. Consequently, both the mass bodies and the inertial mass body can be disposed on the outer peripheral side of the vibration damping device. Thus, a centrifugal force that acts on the restoring force generation member can be further increased, and the moment of inertia of the inertial mass body can be further increased. In addition, it is also possible to increase the weight of the restoring force generation member and set the center of gravity of the restoring force generation member further on the radially outer side by securing the installation space for and the weight of the restoring force generation member (mass bodies) well. Further, by disposing the inertial mass body between the two mass bodies in the axial direction, the degree of freedom in the setting of the shape and the position of the center of gravity of the restoring force generation member can be improved, and the restoring force generation member and the inertial mass body can be provided with the guided portion and the guide portion while easily coupling the two mass bodies to each other. As a result, it is possible to further improve the vibration damping performance of the vibration damping device which includes the restoring force generation member which is swung in the radial direction of the support member along with rotation of the support member.

The support member (16, 16B, 18) may be disposed as offset in the axial direction from the restoring force generation member (22, 22B, 22X, 22Y, 22Z). Consequently, interference between the restoring force generation member or the inertial mass body and the support member in the radial direction can be eliminated. Thus, it is possible to further increase a centrifugal force that acts on the restoring force generation member, and to further increase the moment of inertia of the inertial mass body, by securing an installation space for the restoring force generation member and the inertial mass body better.

The inertial mass body (23) may include two annular members (230) disposed so as to face each other in the axial direction; and the support member (16, 16B) may be disposed between the two annular members (230) in the axial direction. Consequently, it is possible to further improve the vibration damping performance of the vibration damping device by further increasing the moment of inertia of the inertial mass body.

The support member (18) may include two support plates (180) disposed so as to face each other in the axial direction; the two support plates (180) may be disposed between the two mass bodies (220Y) in the axial direction; and the inertial mass body (23Y) may be disposed between the two support plates (180) in the axial direction.

The support member (18) may include two support plates (180) disposed so as to face each other in the axial direction; and the two mass bodies (220Z) and the inertial mass body (23Z) may be disposed between the two support plates (180) in the axial direction.

The guided portion (225) may be provided on the restoring force generation member (22, 22B, 22X, 22Y, 22Z), and include a shaft portion (222) supported by the two mass bodies (220, 220X, 220Y, 220Z) and a roller (224) rotatably supported by the shaft portion (222); and the guide portion (235, 235X) may be formed in the inertial mass body (23, 23X, 23Y, 23Z), and include a recessed curved surface (236) on which the roller (224) rolls. Consequently, it is possible to suppress damping of a centrifugal force that acts on the restoring force generation member significantly well by swinging the restoring force generation member more smoothly.

The restoring force generation member (22, 22B, 22X, 22Y, 22Z) may have two guided portions (225) disposed symmetrically with respect to a center line (CL) of the restoring force generation member (22, 22B, 22X, 22Y, 22Z) in a width direction, and a torque transfer portion (221) installed on the center line (CL) to transmit and receive torque to and from the support member (16, 16B, 18); and the inertial mass body (23, 23X, 23Y, 23Z) may have a plurality of guide portions (235, 235X) formed in correspondence with the two guided portions (225) of the restoring force generation member (22, 22B, 22X, 22Y, 22Z). Consequently, it is possible to swing the restoring force generation member more smoothly while regulating rotation thereof with the guide portions and the guided portions, and to suppress damping of a centrifugal force that acts on the restoring force generation member well by further reducing a friction force generated in the torque transfer portion when torque is transferred between the restoring force generation member and the support member.

The support member (16, 16B, 18) may rotate coaxially and together with a rotary element of a damper device (10, 10B, 10C) that has a plurality of rotary elements (11, 12, 121, 122, 15) that include at least an input element (11) and an output element (15) and an elastic body (SP, SP1, SP2, SP3) that transfers torque between the input element (11) and the output element (15). By coupling the vibration damping device to the rotary element of the damper device in this way, it is possible to damp vibration significantly well using both the damper device and the vibration damping device.

The output element (15) of the damper device (10, 10B, 10C) may be functionally (directly or indirectly) coupled to an input shaft (IS) of a transmission (TM).

The invention according to the present disclosure is not limited to the embodiment described above in any way, and it is a matter of course that the invention may be modified in various ways without departing from the range of the extension of the present disclosure. Further, the mode for carrying out the invention described above is merely a specific form of the invention described in the "SUMMARY OF THE INVENTION" section, and does not limit the elements of the invention described in the "SUMMARY OF THE INVENTION" section.

### INDUSTRIAL APPLICABILITY

The invention according to the present disclosure can be utilized in the field of manufacture of vibration damping devices that damp vibration of a rotary element.

## Claims

1. A vibration damping device that includes: a support member that rotates together with a rotary element, to which torque from an engine is transferred, about a center of rotation of the rotary element; a restoring force generation member that is coupled to the support member so as to transmit and receive torque to and from the support member and that is swingable along a radial direction of the support member along with rotation of the support member; and an inertial mass body coupled to the support member via the restoring force generation member and swung about the center of rotation in conjunction with the restoring force generation member along with rotation of the support member, the vibration damping device comprising:
a guided portion provided on one of the restoring force generation member and the inertial mass body; and
a guide portion formed in the other of the restoring force generation member and the inertial mass body, the guide portion guiding the guided portion such that the restoring force generation member is swung along the radial direction with respect to the center of rotation and the inertial mass body is swung about the center of rotation when the support member is rotated, and a component force of a centrifugal force that acts on the restoring force generation member being transferred from the guided portion to the guide portion, wherein
the restoring force generation member includes two mass bodies coupled so as to face each other in an axial direction of the support member and disposed on both sides of the inertial mass body in the axial direction.

2. The vibration damping device according to claim 1, wherein
the support member is disposed as offset in the axial direction from the restoring force generation member.

3. The vibration damping device according to claim 1 or 2, wherein:
the inertial mass body includes two annular members disposed so as to face each other in the axial direction; and
the support member is disposed between the two annular members in the axial direction.

4. The vibration damping device according to claim 1 or 2, wherein:
the support member includes two support plates disposed so as to face each other in the axial direction;
the two support plates are disposed between the two mass bodies in the axial direction; and
the inertial mass body is disposed between the two support plates in the axial direction.

5. The vibration damping device according to claim 1 or 2, wherein:
the support member includes two support plates disposed so as to face each other in the axial direction; and
the two mass bodies and the inertial mass body are disposed between the two support plates in the axial direction.

6. The vibration damping device according to any one of claims 1 to 5, wherein:
the guided portion is provided on the restoring force generation member, and includes a shaft portion supported by the two mass bodies and a roller rotatably supported by the shaft portion; and
the guide portion is formed in the inertial mass body, and includes a recessed curved surface on which the roller rolls.

7. The vibration damping device according to claim 6, wherein:
the restoring force generation member has two guided portions disposed symmetrically with respect to a center line of the restoring force generation member in a width direction, and a torque transfer portion installed on the center line to transmit and receive torque to and from the support member; and
the inertial mass body has a plurality of guide portions formed in correspondence with the guided portions of the restoring force generation member.

8. The vibration damping device according to any one of claims 1 to 7, wherein
the support member rotates coaxially and together with a rotary element of a damper device that has a plurality of rotary elements that include at least an input element and an output element and an elastic body that transfers torque between the input element and the output element.

9. The vibration damping device according to claim 8, wherein
the output element of the damper device is functionally coupled to an input shaft of a transmission.
